# EUROPÄISCHE PATENTSCHRIFT

(11) **EP 0 897 786 B1**
(45) Veröffentlichungstag und Bekanntmachung des Hinweises auf die Patenterteilung: **22.03.2006**
(21) Anmeldenummer: 98810777.7
(22) Anmeldetag: 13.08.1998
(51) Int. Cl.: B29C 45/77, G05B 13/02

(54) **Verfahren zum Regeln einer Spritzgiessanlage für Kunststoff-Materialien**
Regulation process for an injection moulding machine for plastics
Procédé de régulation d'une machine de moulage par injection de matières plastiques

(30) Priorität: 21.08.1997 CH 195797
(43) Veröffentlichungstag der Anmeldung: 24.02.1999
(73) Patentinhaber: Kistler Holding AG, 8408 Winterthur (CH)
(72) Erfinder: Bader, Christopherus J., 8413 Neftenbach (CH)

(56) Entgegenhaltungen:
- EP-A- 0 436 732
- EP-A- 0 707 936
- DE-C- 19 536 566
- US-A- 4 968 462
- US-A- 5 425 906
- US-A- 5 518 390

## Beschreibung

Die Erfindung betrifft ein Verfahren zum Regeln einer Spritzgiessanlage für Kunststoffe gemäß dem Oberbegriff des anliegenden Anspruchs 1. Ein solches Verfahren its aus der EP-A-0 707 936 bekannt. Bei der Serienherstellung von Spritzgussteilen strebt man gewöhnlich die möglichst gleichmässige Einhaltung einer vorgegebenen Teilequalität an. Dies wird dadurch erschwert, dass oft wesentliche Faktoren wie z.B. Zusammensetzung und Viskosität der Schmelze nicht völlig konstant bleiben. Es wurden daher schon diverse Versuche gemacht, Spritzgiessanlagen so zu regeln, dass sie sich automatisch an sich ändernde Faktoren derart anpassen, dass eine gleichbleibende Teilequalität gewährleistet ist.

Bei einem bekannten gattungsgemässen Verfahren wird die Einspritzgeschwindigkeit während eines jeden Schusses so geregelt, dass der auf die Schnecke der Einspritzvorrichtung zurückwirkende Druck jeweils einem bei der Herstellung eines Gutteils aufgenommenen Referenzverlauf folgt (s. Plastverarbeiter 48/1 (1997), S. 22,23 und dort angegebene Referenzen). Da die Regelung in Echtzeit erfolgt, also die Regeleinheit sehr rasch reagieren muss, ist der zur Umsetzung des Verfahrens in einer gattungsgemässen Spritzgiessanlage erforderliche Aufwand beträchtlich, insbesondere werden hohe Anforderungen an die Rechenleistung und die Speicherkapazität der Regeleinheit gestellt, die aus dem überwachten Druckverlauf unmittelbar Signale zur Steuerung der Einspritzvorrichtung erzeugt. Ausserdem ist die Regelung nur mittels einer engen Einbeziehung der Maschinendynamik möglich, so dass sie praktisch nur in der Spritzgiessanlage, für die sie entwickelt wurde, ohne weiteres einsetzbar ist. Eine Übertragung auf andere Anlagen ist ohne umfassende und langwierige Anpassungen nicht möglich.

Der Erfindung liegt daher die Aufgabe zu Grunde, ein gattungsgemässes Verfahren anzugeben, welches mittels einer verhältnismässig einfach aufgebauten Auswerteeinheit durchführbar und auf einfache Weise an verschiedene Spritzgiessanlagen anpassbar ist.

Diese Aufgabe wird durch die Erfindung, wie sie in Anspruch 1 gekennzeichnet ist, gelöst. Vorteilhufte Weiterbildungen sind in den Underansprüchen offenbart. Die durch die Erfindung erreichten Vorteile sind vor allem darin zu sehen, dass das angegebene Verfahren eine äusserst günstig in verschiedenen Spritzgiessanlagen implementierbare Regelung erlaubt. Die erfindungsgemässen Anteile der Regelung können in einer separaten Auswerteeinheit ausgeführt werden, die mit bereits vorhandenen Regeleinheiten kommunizieren kann. Dies erlaubt eine verhältnismässig einfache Nachrüstung auch bereits erstellter gattungsgemässer Spritzgiessanlagen. Die Regelung ist sehr stabil und zuverlässig und erlaubt es, eine hohe Konstanz der Teilequalität zu realisieren.

Im folgenden wird die Erfindung anhand von Zeichnungen, welche lediglich ein Ausführungsbeispiel darstellen, näher erläutert. Es zeigen
- Fig. 1: schematisch eine Spritzgiessanlage zur Durchführung des erfindungsgemässen Verfahrens,
- Fig. 2: schematisch eine Kavität zur Herstellung eines Normprüfstabes in einer Spritzgiessanlage,
- Fig. 3: den Druckverlauf bei der Herstellung des Normprüfstabes aus amorphem Kunststoff, entsprechend einem Referenzverlauf (Gutteil), wobei der Druck in Angussnähe innerhalb der Kavität gemessen wurde,
- Fig. 4: einen Ausschnitt aus einem Druckverlauf und die Bestimmung von Führungsgrössen für die Bewertung der Einspritzgeschwindigkeit,
- Fig. 5a: den Referenzverlauf gemäss Fig. 3 sowie einen Verlauf mit zu grosser Nachdruckhöhe und eine Möglichkeit zur Bestimmung von Führungsgrössen für die Bewertung der Nachdruckhöhe,
- Fig. 5b: einen Ausschnitt aus dem Referenzverlauf und dem Druckverlauf gemäss Fig. 5a und eine andere Möglichkeit zur Bestimmung weiterer Führungsgrössen für die Bewertung der Nachdruckhöhe,
- Fig. 6: den Druckverlauf bei der Herstellung des Normprüfstabes aus teilkristallinem Kunststoff, entsprechend einem Referenzverlauf (Gutteil) und weitere Massnahmen zur Bestimmung einer Führungsgrösse für die Bewertung der Nachdruckhöhe,
- Fig. 7a: den Druckverlauf bei zu kleiner Nachdruckzeit und einen ersten Schritt zur Bestimmung von Führungsgrössen für die Bewertung der Nachdruckzeit,
- Fig. 7b: einen normierten Ausschnitt aus dem Druckverlauf nach Fig. 7a zur Bestimmung von Führungsgrössen für die Bewertung der Nachdruckzeit,
- Fig. 7c: einen normierten Ausschnitt aus dem Druckverlauf nach Fig. 7a zur Bestimmung von weiteren Führungsgrössen für die Bewertung der Nachdruckzeit,
- Fig. 7d: einen normierten Ausschnitt aus dem Druckverlauf nach Fig. 7a zur Bestimmung von weiteren Führungsgrössen für die Bewertung der Nachdruckzeit,
- Fig. 8: einen abweichenden Referenzverlauf sowie einen Druckverlauf bei zu grosser Nachdruckzeit und eine Möglichkeit zur Bestimmung einer Führungsgrösse für die Bewertung der Nachdruckzeit,
- Fig. 9a: den Referenzverlauf gemäss Fig. 3 und eine Möglichkeit zur Bestimmung von Führungsgrössen für die Bewertung der Formtemperatur,
- Fig. 9b: den Referenzverlauf gemäss Fig. 3 zur Bestimmung von weiteren Führungsgrössen für die Bewertung der Formtemperatur,
- Fig. 10a: einen typischen Druckverlauf während einer Füllphase,
- Fig. 10b: einen weiteren typischen Druckverlauf während einer Füllphase,
- Fig. 10c: einen weiteren typischen Druckverlauf während einer Füllphase,
- Fig. 11a: Klassifizierungsfunktionen für die Bestimmung von Klassifizierungsgrössen für die Regelung eines Profils für die Einspritzgeschwindigkeit,
- Fig. 11b: Klassifizierungsfunktionen für die Bestimmung von weiteren Klassifizierungsgrössen.
- Fig. 11c: Klassifizierungsfunktionen für die Bestimmung von weiteren Klassifizierungsgrössen und
- Fig. 12: Auswertungsfunktionen für die Bestimmung einer Korrekturgrösse aufgrund der Klassifizierungsgrössen.

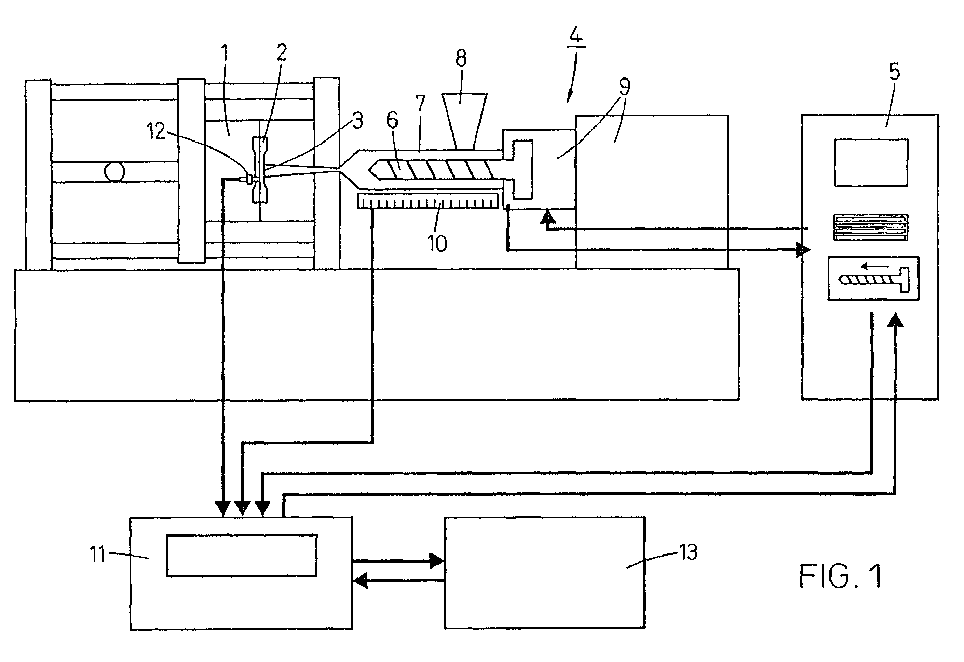

Die in Fig. 1 schematisch dargestellte Spritzgiessanlage weist eine heizbare Form 1 mit einer Kavität 2 auf. Diese ist über eine Angussöffnung 3 mit einer Einspritzvorrichtung 4 verbunden, welche von einer Regeleinheit 5 gesteuert wird, die ausserdem die Formtemperatur innerhalb eines Toleranzbandes um eine vorgebbare Formsolltemperatur hält. Die Einspritzvorrichtung 4 umfasst eine Schnecke 6 in einem Zylinder 7 mit einem Trichter 8, einen z.B. hydraulischen Antrieb 9 für die Schnecke 6 sowie eine Positionsüberwachung 10 zur Überwachung von Position und Geschwindigkeit derselben. Eingänge einer Auswerteeinheit 11 sind mit der Positionsüberwachung 10 und einem innerhalb der Kavität 2 angeordneten, z.B. piezoelektrischen Drucksensor 12 verbunden, Ausgänge derselben mit der Regeleinheit 5. Ausserdem ist der Auswerteeinheit 11 eine Umschaltpunkterkennungseinheit 13 beigeordnet, mit der sie Daten austauscht.

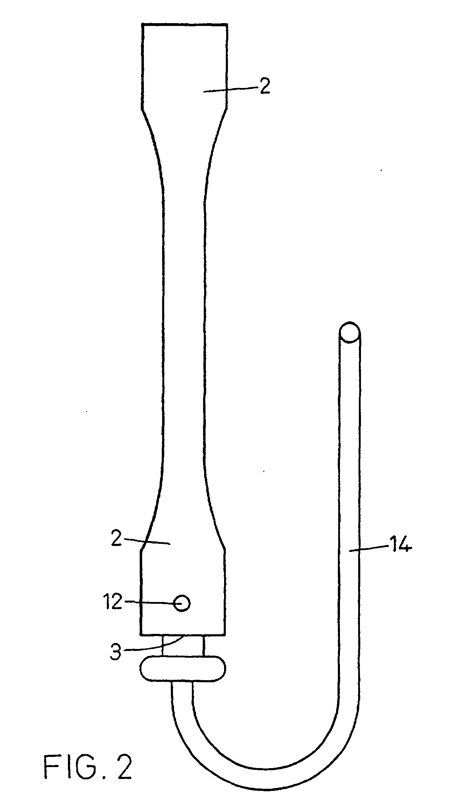

Die Ausbildung der in Fig. 1 nur sehr schematisch gezeigten Kavität 2 ist besser aus Fig. 2 zu erkennen. Es handelt sich um eine Kavität zur Herstellung eines Normprüfstabes, wie sie zur Überprüfung des Einflusses von Verfahrensparametern in Spritzgiessanlagen häufig verwendet werden. Am unteren Ende der Kavität 2 ist die Angussöffnung 3 angeordnet, an der eine die Kavität 2 mit der Einspritzvorrichtung 4 (Fig. 1) verbindende Zuleitung mündet. Nur wenig oberhalb der Angussöffnung 3, also in unmittelbarer Nähe derselben ist seitlich an der Wand der Kavität 2 der Drucksensor 12 angeordnet. Er liegt damit zugleich an einer Stelle, an der die Kavität 2 quer zur Fliessrichtung der Kunststoffschmelze maximalen Querschnitt aufweist. Die Lage des Drucksensors 12 in Angussnähe wird bevorzugt, da er so bereits bei Beginn der Füllphase von der Schmelze erreicht wird und von da an, d.h. auch für den Verlauf der Füllphase, aussagekräftige Werte liefert.

Aus Prüfungen und Messungen an einem auf der Anlage hergestellten Normprüfstab lassen sich allgemeingültige Aussagen über die auf der Anlage und mit der verwendeten Regelung etc. erzielbare Teilequalität ableiten. Das erfindungsgemässe Verfahren wird daher im folgenden am Beispiel der Herstellung eines derartigen Normprüfstabes erläutert. Ausserdem wird in erster Linie das Verfahren bei Verwendung von amorphem Kunststoff geschildert. Bei Verwendung von teilkristallinem Kunststoff wird im grossen und ganzen gleich vorgegangen. Auf wesentliche Abweichungen wird im folgenden hingewiesen werden.

Der grundsätzliche Ablauf bei der Herstellung eines Spritzgussteils ist der folgende: Der Zylinder 7 wird über den Trichter 8 mit Kunststoffgranulat gefüllt, während die Schnecke 6 von der Antriebsvorrichtung 9 in Drehung versetzt und in ihre Grundstellung am hinteren Ende des Zylinders 7 zurückgezogen wird. Durch den Kontakt mit der beheizten Schnecke wird dabei das Granulat aufgeschmolzen, so dass schliesslich der Zylinder 7 mit Kunststoffschmelze gefüllt ist. Anschliessend wird die Schnecke 6 durch den Antrieb 9 nach vorn geschoben und die Schmelze durch die Angussöffnung 3 in die Kavität 2 eingespritzt.

Während der Füllphase, also während die Kavität 2 mit Kunststoffschmelze gefüllt wird, wird die vom Antrieb 9 auf die Schnecke 6 ausgeübte Kraft aufgrund des Ausgangssignals der Positionsüberwachung z.B. so geregelt, dass die Schneckenvortriebsgeschwindigkeit als Funktion der Schneckenposition einem vorgegebenen Profil folgt. Insbesondere können positionsintervallweise feste Werte oder auch lineare Rampen mit festen Steigungen für die Schneckenvortriebsgeschwindigkeit vorgegebenen sein. Natürlich ist auch der einfache Fall einer einzigen fest vorgegebenen Geschwindigkeit möglich. Andererseits kann der Verlauf der Schneckenvortriebsgeschwindigkeit auch auf mehr oder weniger komplexe Weise geregelt sein.

Sobald die Kavität 2 vollständig gefüllt und damit der sogenannte Umschaltpunkt erreicht ist, wird dies von der Umschaltpunkterkennungseinheit 13 erkannt und nach einem entsprechenden Signal an die Regeleinheit 5 von der während der Füllphase angewendeten Regelung nach einem vorgegebenen Profil o. dgl. der Schneckenvortriebsgeschwindigkeit umgeschaltet auf die der Nachdruckphase gemässe direkte Einstellung der von der Schnecke 6 auf die Schmelze ausgeübten Kraft, des Nachdrucks, der über eine bestimmte Nachdruckzeit auf einem bestimmten Wert, der Nachdruckhöhe, gehalten wird. Daneben ist es auch möglich, den Nachdruck etwa nach einem zeitabhängigen Profil einzustellen, z.B. ihn intervallweise abzustufen. Im folgenden wird jedoch nur der Fall eines konstant auf einer bestimmten Nachdruckhöhe gehaltenen Nachdrucks behandelt.

Die Auswerteeinheit 11 leitet nach jedem Schuss aus dem mittels des Drucksensors 12 mit einer Abtastfrequenz von z.B. 1'000 Hz aufgenommenen Druckverlauf für die verschiedenen Regelparameter jeweils eine Bewertung ab. Als Regelparameter werden dabei vorzugsweise ein Regelfaktor für die Einspritzgeschwindigkeit, die Nachdruckhöhe, die Nachdruckzeit und die Formtemperatur oder genauer die Formsolltemperatur, nach der die Formtemperatur geregelt wird, herangezogen. Der Regelfaktor der Einspritzgeschwindigkeit wirkt sich auf dieselbe z.B. aus, indem das Geschwindigkeitsprofil, dessen Verlauf im übrigen anderweitig vorgegeben ist, mit demselben multipliziert wird. Ist nur eine feste Einspritzgeschwindikgkeit gegeben, so läuft dies natürlich auf eine Heranziehung der Einspritzgeschwidigkeit selbst als Regelparameter hinaus.

Aus den Druckverläufen werden, eventuell nach einer Glättung, welche z.B. durch Mittelung über eine bestimmte Anzahl benachbarter Punkte erfolgt, für jeden Regelparameter Sätze von Führungsgrössen bestimmt, aus welchen dann, vorzugsweise meist unter Einsatz eines für den Regelparameter spezifischen neuronalen Netzes, die Bewertung abgeleitet wird. Da die Bewertung eines Schusses jeweils frühestens für den nächsten Schuss benötigt wird, ist ihre Ableitung nicht zeitkritisch. Die Netze sind auch durchwegs einfach aufgebaut mit einem Ausgangsneuron und einer Zwischenlage oder zwei Zwischenlagen mit verhältnissmässig wenigen Neuronen. Komplizierte Netze mit hoher Neuronenzahl sind hier ohnedies weniger geeignet, weil sie zum "Auswendiglernen" neigen und nur in der ummittelbaren Nähe der "gelernten" Fälle zuverlässig arbeiten. So können die neuronalen Netze ohne weiteres auf einem Digitalrechner, vorzugsweise einem Mikroprozessor simuliert werden.

Für die Bestimmung der meisten Führungsgrössen aus dem Druckverlauf wie auch für die Umschaltung der Regelung von der Füllphase auf die Nachdruckphase ist eine rasche und zuverlässige Erkennung des Umschaltpunktes eine wesentliche Voraussetzung. Die Umschaltpunkterkennung, wie sie in der Umschaltpunkterkennungseinheit 13 erfolgt, kann grundsätzlich auf beliebige Art geschehen. Beispielsweise wird sie nach dem in der EP-A-0 707 936 beschriebenen Verfahren ausgeführt, das sich als sehr zuverlässig bewährt hat.

Für die meisten Regelparameter wird in die Bewertung ein Referenzverlauf einbezogen. Er entspricht einem Druckverlauf, der bei der Herstellung eines Gutteils, d.h. eines Teils, das die jeweiligen Qualitätsanforderungen erfüllt, gemessen und gespeichert wurde. Die Herstellung des Gutteils kann dabei unter manueller Einstellung der Parameter z.B. im Rahmen von Probeläufen erfolgt sein. Vor Beginn der Serienproduktion eines Teils wird also ein derartiger Referenzverlauf aufgenommen und, eventuell nach einer Glättung, ausgewertet, d.h. diejenigen Grössen aus ihm abgeleitet und in der Auswerteeinheit gespeichert, die in der Serienproduktion bei der Bestimmung der Führungsgrössen immer wieder benötigt werden. Ebenfalls vor Produktionsbeginn werden die neuronalen Netze anhand von experimentell ermittelten Daten trainiert.

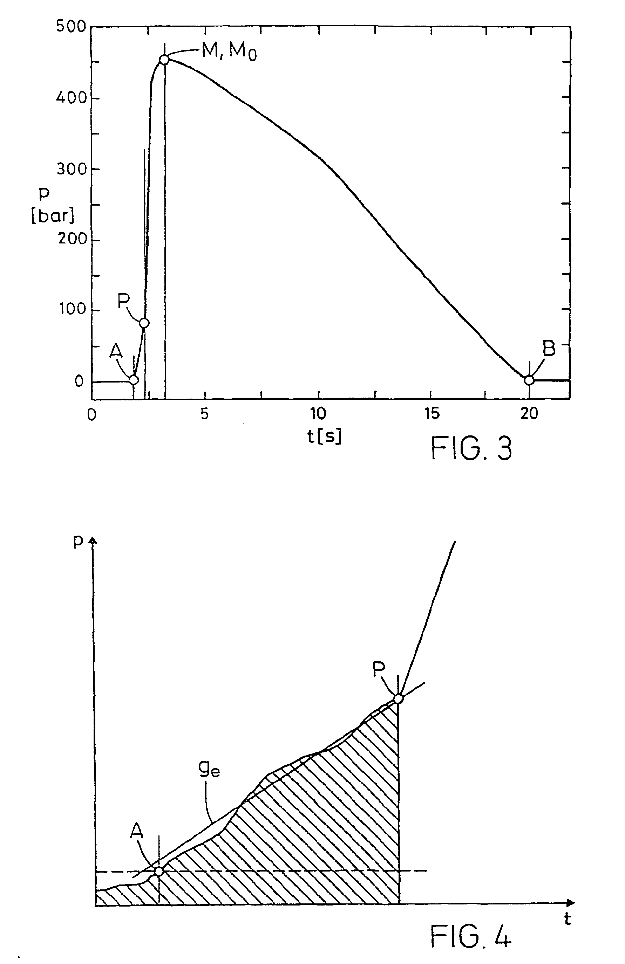

Ein Druckverlauf, der bei der Herstellung eines Gutteils gewonnen und auch als Referenzverlauf herangezogen wird, ist in Fig. 3 dargestellt (Druck p als Funktion der Zeit t). Dort ist auch der Umschaltpunkt P eingezeichnet sowie das bei der Bestimmung der Führungsgrössen ebenfalls wichtige Druckmaximum M, das im Fall der Figur 3 selbstverständlich mit dem Druckmaximum des Referenzverlaufs M₀ übereinstimmt. Ebenfalls von Bedeutung sind die Zeitpunkte Einspritzbeginn A und Druckabfallende B, die z.B. durch den Anstieg des Druckes über 5 bar bzw. dessen Abfall unter diese Grenze definiert sein können. Bei Vergleichen zwischen dem (aktuellen) Druckverlauf und dem Referenzverlauf und Ermittlung einander entsprechender Grössen aus den beiden Verläufen werden jeweils die Umschaltpunkte P auf der Zeitachse zur Deckung gebracht.

Vor jedem Schuss wird dann aufgrund der Bewertung für einen Regelparameter, die bei einem oder vorzugsweise bei mehreren unmittelbar voraufgehenden Schüssen erhalten wurde, entschieden, ob ein diesbezüglicher Nachregelungs- oder Änderungsbedarf vorliegt und, wenn dies der Fall ist, ein Korrekturfaktor für den entsprechenden Regelparameter festgelegt. Die Bewertungen sind vorzugsweise so normiert, dass sie zwischen -1 und +1 liegen, wobei sie dann Null sind, wenn der Regelparameter genau richtig eingestellt ist, während negative Werte auf einen zu tief und positive Werte auf einen zu hoch eingestellten Regelparameter deuten.

Zur Festlegung des Korrekturfaktors kann der Wertebereich der Bewertung z.B. in Intervalle eingeteilt werden und, wenn sich die Bewertung des letzten Schusses in einem bestimmten Intervall befindet, aus diesem Umstand ein bestimmter Korrekturfaktor abgeleitet werden. Es kann auch noch die Bewertung des dem letzten Schuss voraufgegangenen Schusses daraufhin überprüft werden, ob sie eine Abweichung gleichen Vorzeichens aufweist und nur dann ein Bedarf festgestellt und eine Korrektur durchgeführt werden, wenn beide Abweichungen gleiches Vorzeichen aufweisen. Es können auch noch kompliziertere Auswertemodi benutzt werden, z.B. kann das Bestehen eines Nachregelungsbedarfs davon abhängig gemacht werden, ob bei den vier letzten Schüssen die Bewertung mindestens zwei oder drei Mal das gleiche Vorzeichen aufwies oder eine bestimmte Schwelle überschritt etc., wobei die Grösse der Schwelle auch davon abhängen kann, wie weit der Schuss zurückliegt oder es können andere derartige m-aus-n-Schemata mit n≥m>1 verwendet werden. Die Berücksichtigung von bei zwei oder mehr voraufgegangenen Schüssen abgeleiteten Bewertungen stellt eine Sicherung gegen die Überbewertung von Ausreissern und gegen das Entstehen von Schwingungen um ein Gutteil dar. Sie erhöht die Stabilität des Verfahrens wesentlich. Dass die Regelung dadurch nur verzögert anspricht, hat sich nicht als nachteilig erwiesen, da die Änderungen von Einflussfaktoren, die durch die Regelung ausgeglichen werden, gewöhnlich nur langsam erfolgen.

Als weitere Stabilisierungsmassnahme wird vorzugsweise die Korrektur jeweils auf höchstens einen Regelparameter beschränkt. Das kann z.B. derjenige sein, dessen Bewertung am weitesten von Null abweicht. Schliesslich können auch in anderer Weise für die Entscheidung darüber, ob ein bestimmter Regelparameter geändert wird, oder ob für ihn Nachregelungsbedarf besteht, auch die Ergebnisse bei anderen Regelparametern herangezogen werden. So wird die Bewertung der Einspritzgeschwindigkeit in die Ableitung derjenigen für die Nachdruckhöhe einbezogen, da eine zu hohe Einspritzgeschwindigkeit sich auch auf den Teil des Druckverlaufs auswirkt, der sonst im wesentlichen von der Nachdruckhöhe bestimmt wird. Nachregelungsbedarf für die träge reagierende Formsolltemperatur wird beispielsweise nur dann bestätigt, wenn bei Einspritzgeschwindigkeit, Nachdruckhöhe und Nachdruckzeit kein Nachregelungsbedarf festgestellt wurde.

Wird für einen bestimmten Regelparameter Nachregelungsbedarf festgestellt, so wird er, gegebenenfalls unter bestimmten Vorbehalten, mit dem ermittelten Korrekturfaktor multipliziert und der so modifizierte Regelparameter von der Regeleinheit 5 am Ausgang der Auswerteeinheit 11 abgenommen.

Im folgenden wird am bereits oben angesprochenen Beispiel die Bestimmung der Führungsgrössen und Ableitung der Bewertungen für die einzelnen Regelparameter näher erläutert.

### Einspritzgeschwindigkeit

Die Einspritzgeschwindigkeit beeinflusst vor allem den Druckverlauf während der Füllphase. Zu hohe Einspritzgeschwindigkeit verursacht einen steilen Anstieg in diesem Bereich, während bei zu geringer Einspritzgeschwindigkeit ein verzögerter und langsamer Anstieg resultiert.

Die Bewertung für die Einspritzgeschwindigkeit oder für einen Regelfaktor derselben wird daher (Fig. 4) aus dem Druckverlauf und dem Referenzverlauf zwischen dem Einspritzbeginn A und dem Umschaltpunkt P abgeleitet. Eine erste Führungsgrösse wird beispielsweise bestimmt, indem der Druckverlauf über diesen Abschnitt integriert (Fig. 4, schraffierte Fläche) und durch die entsprechende aus dem Referenzverlauf abgeleitete Grösse geteilt wird. Zur Bestimmung einer zweiten Führungsgrösse wird durch den Druckverlauf im besagten Abschnitt nach der Methode der minimalen quadratischen Abweichung eine Regressionsgerade gₑ (Fig. 4) gelegt und deren Steigung durch die entsprechende aus dem Referenzverlauf abgeleitete Grösse geteilt. Die Führungsgrössen werden den beiden Eingangsneuronen eines neuronalen Netzes zugeführt, das daraus eine Bewertung für die Einspritzgeschwindigkeit oder deren Regelfaktor ableitet. Die Feststellung, ob Nachregelungsbedarf vorliegt und gegebenenfalls die Entscheidung über die Grösse des Korrekturfaktors wird je nach Art und Grösse der Abweichung der letzten Bewertung von Null unter Berücksichtigung der Bewertungen eines bis dreier weiterer voraufgegangener Schüsse getroffen.

### Nachdruckhöhe

Die Nachdruckhöhe beeinflusst vor allem den Druckverlauf um das Druckmaximum M, das gewöhnlich kurz nach dem Umschaltpunkt P erreicht wird. Zu grosse Nachdruckhöhe führt zu einem überhöhten Druckmaximum in der Kavität 2, was Spannungen im Spritzgussteil und im schlimmsten Fall ein Öffnen oder eine Deformation der Form 1 verursachen kann. Zu geringe Nachdruckhöhe führt zu einem zu kleinen Druckmaximum und einem zu raschen Druckabfall, was schlechte Oberflächenqualität am Spritzgussteil nach sich ziehen kann.

Da auch die Einspritzgeschwindigkeit den Bereich um das Druckmaximum beeinflusst und vor allem eine ausgeprägte Druckspitze verursachen kann, wenn sie überhöht ist, wird im allgemeinen ausser dem Druckverlauf in der Umgebung des Druckmaximums auch die Bewertung für die Einspritzgeschwindigkeit berücksichtigt. Die Bestimmung der Führungsgrössen erfolgt auf der Grundlage eines z.B. durch Mittelung über einige Punkte des geglätteten aktuellen Druckverlaufs und des geglätteten Referenzverlaufs.

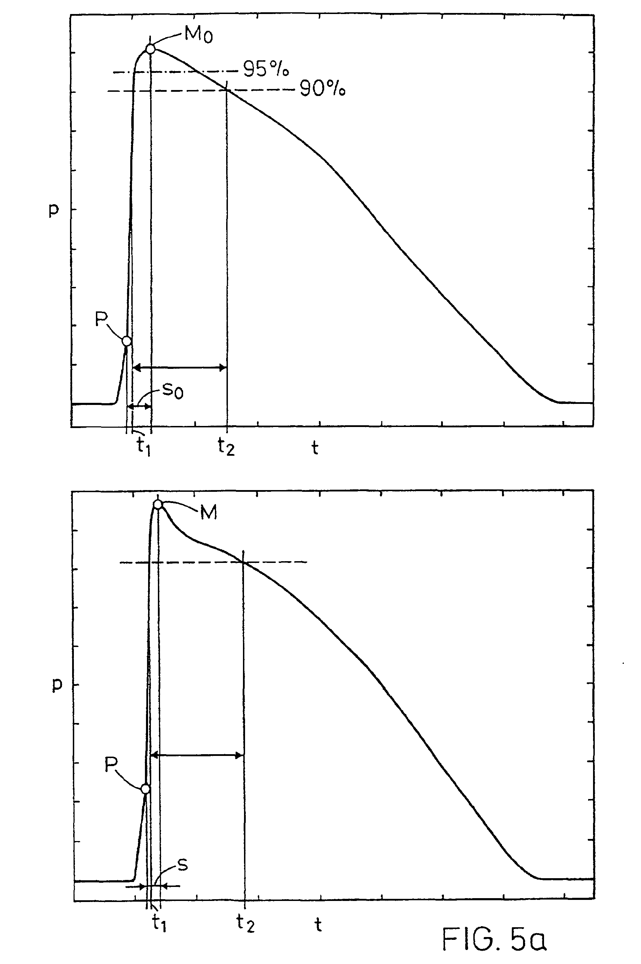

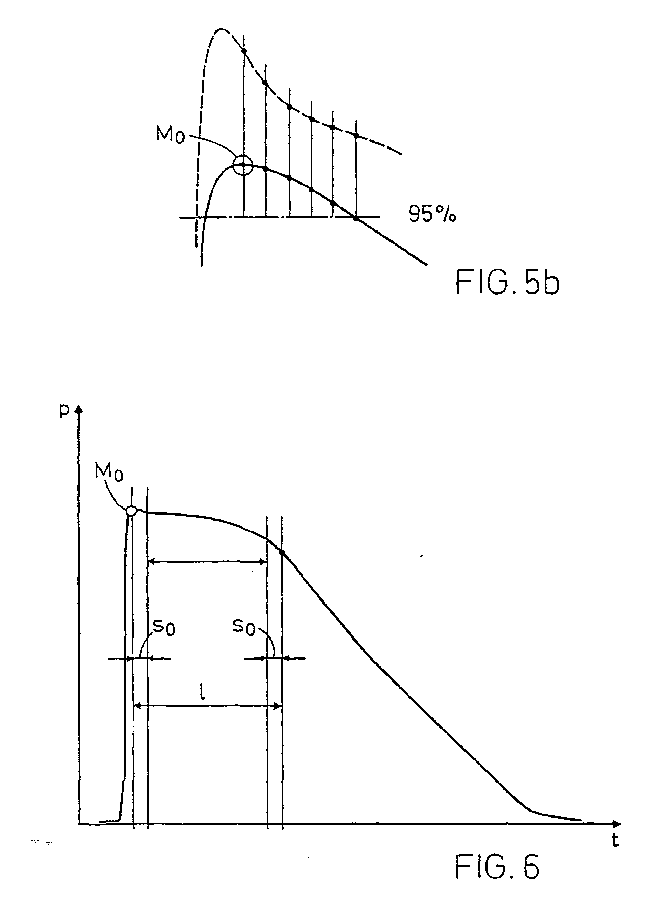

Im Verlauf einer Grobbewertung werden, damit das Ergebnis nicht zu sehr durch eine allfällige Druckspitze beeinflusst wird, die Führungsgrössen so bestimmt, dass eine Mittelung des Druckverlaufs über einen das Druckmaximum M₀ des Referenzverlaufs enthaltenden oder ihm benachbarten Bereich resultiert. In Fig. 5a ist oben der Referenzverlauf dargestellt, darunter der hier durch eine etwas zu grosse Nachruckhöhe gekennzeichnete aktuelle Druckverlauf. Als erste Führungsgrösse wird der zeitliche Abstand s zwischen dem Umschaltpunkt P und dem Druckmaximum M, geteilt durch die entsprechende Grösse beim Referenzverlauf, d.h. durch den Abstand s₀ zwischen dem Umschaltpunkt P und dem Druckmaximum M₀, bestimmt. Eine zweite Führungsgrösse wird bestimmt, indem der aktuelle Druckverlauf über ein Zeit-Intervall (t1, t2) integriert wird, das dadurch bestimmt ist, dass beim Referenzverlauf der Druck mindestens 90% des Druckmaximums M₀ beträgt; das Integral wird wiederum durch die entsprechende vom Referenzverlauf abgeleitete Grösse, d.h. das Integral des Referenzverlaufs über das gleiche Zeit-Intervall, geteilt. Schliesslich werden (Fig. 5b) sechs weitere Führungsgrössen bestimmt, indem das Zeit-Intervall zwischen dem Druckmaximum M₀ des Referenzverlaufs und dem Zeitpunkt, zu dem dort der Druck auf 95% desselben abgefallen ist, in 5 gleiche Teilintervalle geteilt wird und am Ort des Druckmaximums M₀ und an den Endpunkten der besagten Teilintervalle jeweils die Differenz zwischen dem Druck gemäss dem aktuellen Druckverlauf und gemäss dem Referenzverlauf gebildet und durch das Druckmaximum M₀ des Referenzverlaufs geteilt wird.

Die - zusammen mit der Bewertung für die Einspritzgeschwindigkeit - neun Führungsgrössen werden wiederum neun Eingangsneuronen eines neuronalen Netzes zugeführt, das eine Bewertung für die Nachdruckhöhe erzeugt.

Liegt die Bewertung nach der Grobbewertung unter einer bestimmten Schranke, so wird in einer Feinbewertung eine neue Bewertung abgeleitet, für welche lediglich die sechs normierten Druckdifferenzen (Fig. 5b) sowie das Druckmaximum M gemäss dem aktuellen Druckverlauf, geteilt durch das Druckmaximum M₀ des Referenzverlaufs, als Führungsgrössen verwendet werden. Dies entspricht einer weniger ausgeprägten Mittelung und bewirkt aber eine grössere Empfindlichkeit. Die Führungsgrössen werden den sieben Eingangsneuronen eines weiteren neuronalen Netzes zugeführt, das daraus eine neue Bewertung ableitet.

Bei Verwendung eines teilkristallinen Kunststoffs wird etwas anders vorgegangen. Da hier eine Neigung zum Überschwingen am Druckmaximum und im an desselbe anschliessenden Bereich besteht, wird ein unmittelbar auf das Druckmaximum folgender Abschnitt ausgeschlossen. Dazu wird (Fig. 6) zuerst ein vorläufiges Intervall bestimmt, dessen Anfangspunkt im Druckmaximum Mₒ des Referenzverlaufs liegt und dessen Endpunkt durch einen Knick im Referenzverlauf bestimmt ist, der mit weiter unten im Zusammenhang mit der Bestimmung der Führungsgrössen für die Nachdruckzeit geschilderten Methoden aufgefunden wird. Dann wird von den Endpunkten dieses vorläufigen Intervalls der Länge 1 her jeweils ein Abschnitt einer Länge s₀, welche z.B. 1/10 betragen kann, ausgeschieden und im verbleibenden Intervall v = 1 -2 s₀ nach der Methode der minimalen quadratischen Abweichung eine Parabel an den Referenzverlauf gelegt, desgleich im entsprechenden Intervall an den aktuellen Druckverlauf. Die in diesem Fall einzige Führungsgrösse wird bestimmt als der Funktionswert der Parabel an den aktuellen Druckverlauf am Beginn des verbleibenden Intervalls, geteilt durch die entsprechende vom Referenzverlauf abgeleitete Grösse. Sie wird einem neuronalen Netz mit in diesem Fall zwei Zwischenlagen zugeführt, das daraus eine Bewertung für die Nachdruckhöhe ableitet.

Auch bei der Nachdruckhöhe werden für die Feststellung, ob Nachregelungsbedarf vorliegt, die Bewertung aus bis zu vier vorausgehenden Schüssen berücksichtigt.

### Nachdruckzeit

Die Nachdruckzeit beeinflusst den abfallenden Teil des Druckverlaufs. Bei deutlich zu kurzer Nachdruckzeit fällt der Druck schlagartig ab, was sich in einem deutlichen Knick des Druckverlaufs zeigt. Der zu frühe Druckabfall kann Einfallstellen am Spritzgussteil zur Folge haben. Eine zu lange Nachdruckzeit hat bei amorphem Kunststoff keine Auswirkung auf die Teilequalität, doch verlängert sie die Zykluszeit über das notwendige Mass hinaus und verschlechtert den Ausstoss. Bei teilkristallinem Kunststoff kann sie sich auch geringfügig auf die Morphologie der Teile auswirken. Eine Änderung der Nachdruckzeit erfolgt vorzugsweise nur unter der Bedingung, dass für die Einspritzgeschwindigkeit und die Nachdruckhöhe kein Nachregelungsbedarf festgestellt wurde, da wegen des Einflusses dieser Parameter auf den Druckverlauf andernfalls eine sichere Beurteilung der Nachdruckzeit kaum möglich ist.

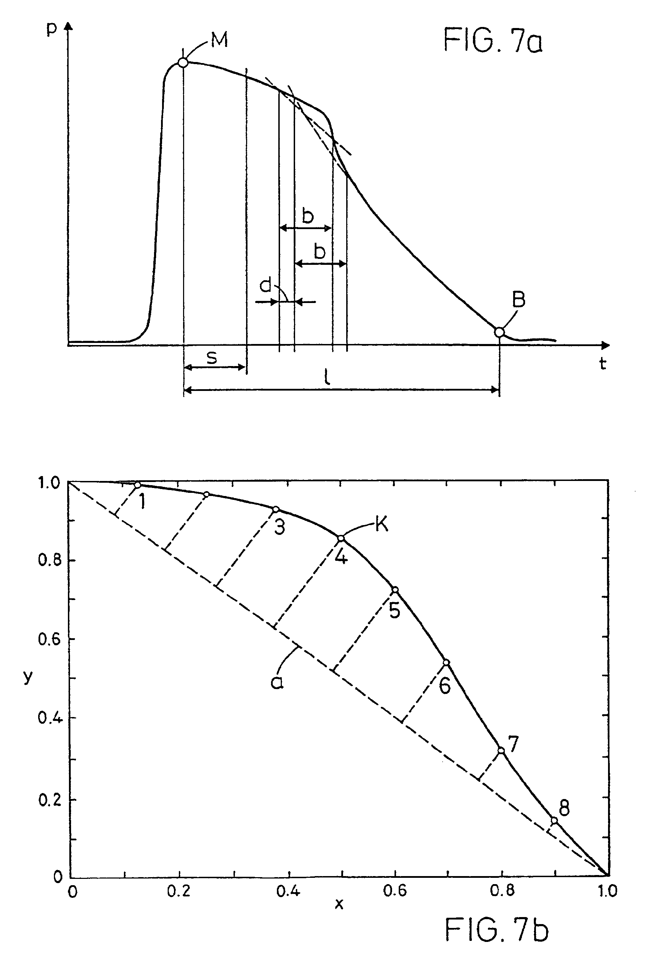

Eine Grobbewertung der Nachdruckzeit kann im wesentlichen allein auf der Identifikation eines Knicks im aktuellen Druckverlauf und die Ermittlung der Krümmung und/oder der Steigung in der Umgebung desselben beruhen. Ein Referenzverlauf braucht dazu nicht herangezogen zu werden. Fig. 7a zeigt einen Druckverlauf, der einer deutlich zu kurzen Nachdruckzeit entspricht. Nach Glättung des Druckverlaufs wird zuerst vom durch das Druckmaximum M und das Druckabfallende B begrenzten Zeit-Intervall am vorderen Ende ein Teilintervall der Länge s, die z.B. 1/5 betragen kann, wobei 1 die Gesamtlänge des Intervalls ist, ausgeschieden. Über den verbleibenden Teil des Intervalls wird nun eine Sekante, deren zeitliche Länge fest ist und z.B. b=1/5 beträgt, in Schritten von d=1/15 verschoben. Für jede Sekante wird der maximale Normalabstand zum Druckverlauf bestimmt und schliesslich diejenige Sekante festgehalten, bei der dieser Maximalabstand am grössten ist. Der entsprechende Punkt der Druckverlaufskurve wird als ungefähre Lage des gesuchten Knicks identifiziert. Anschliessend wird ein um den besagten Punkt symmetrisches, kürzeres Intervall - die Länge kann z.B. 1/5 betragen - mit einer kürzeren Sekante - zeitliche Länge z.B. 1/15 - nach der Sekante mit dem Maximum des Maximalabstandes abgesucht, wobei die kürzere Sekante in Schritten von z.B. 1/45 verschoben wird. Auf diese Weise wird nun analog zur Auffindung der ungefähren Lage des Knicks dessen genaue Lage bestimmt.

Nun wird ein um die Lage des Knicks symmetrisches Intervall der Länge 2*1/15 bestimmt und Zeit- und Druckdifferenz über dasselbe jeweils auf 1 normiert (Fig. 7b). Dann wird die vor dem Knick K liegende erste Hälfte des Intervalls in 4 und die zweite Hälfte in 5 unter sich je äquidistante Teilintervalle unterteilt. An allen innerhalb des Intervalls liegenden Teilungspunkten 1-8 wird dann der Normalabstand zur Sekante a bestimmt. Die Normalabstände bilden acht Führungsgrössen.

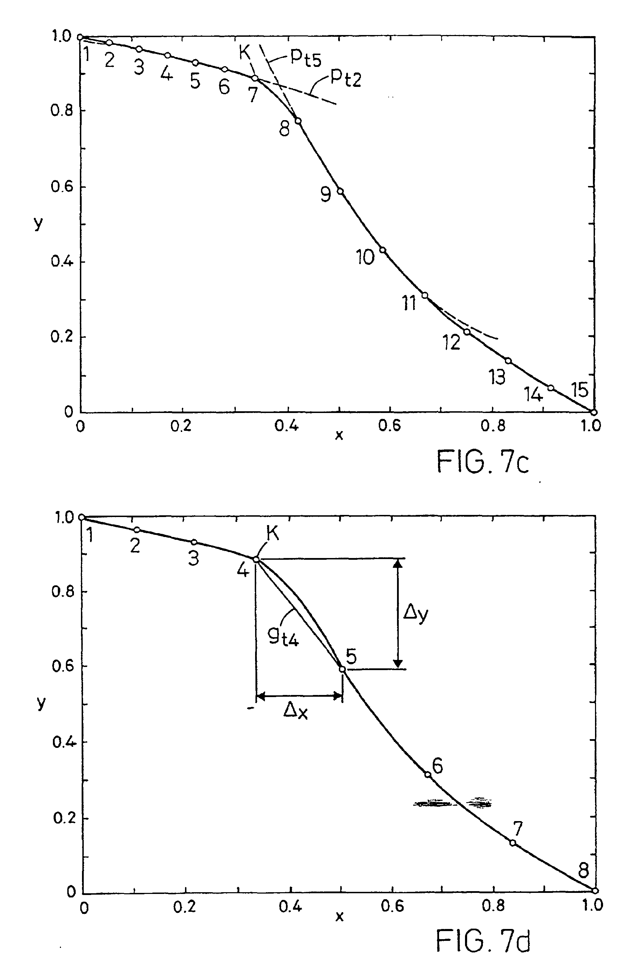

Den weiteren Schritten wird ein um z.B. 1/15 verlängertes Intervall zugrundegelegt und ebenfalls Zeit- und Druckdifferenz jeweils auf 1 normiert. Der vor dem Knick K liegende Teil, der ein Drittel der Gesamtlänge einnimmt, wird (Fig. 7c) in 6 gleiche Teilintervalle geteilt, der restliche Teil in 8 ebenfalls unter sich gleiche Teilintervalle, so dass mit den Randpunkten Teilungspunkte 1-15 vorliegen. Dann werden durch aufeinanderfolgende Tripel jeweils aufeinanderfolgender Teilungspunkte, welche Tripel jeweils an einem Punkt überlappen, insgesamt sieben Parabeln gelegt (Fig. 7c zeigt die Parabeln pₜ₂ durch die Punkte 3,4,5 und pₜ₅ durch die Punkte 9, 10, 11). Die sieben Koeffizienten der quadratischen Terme, die jeweils etwa die Krümmung der Parabel im Schmiegungsbereich des Druckverlaufs widerspiegeln, werden als weitere Führungsgrössen herangezogen. Schliesslich wird (Fig. 7d) der oberhalb des Knicks K liegende Teil des gleichen Intervalls in 3 gleiche Teilintervalle geteilt, der restliche in 4 und so Teilungsunkte 1-8 bestimmt. Dann werden durch aufeinanderfolgende Paare jeweils aufeinanderfolgender Teilungspunkte insgesamt sieben Geraden gelegt (Fig.7d zeigt die Gerade gₜ₄ durch die Punkte 4,5), deren Steigungen sieben weitere Führungsgrössen bilden.

Die zweiundzwanzig Führungsgrössen werden nun den Eingangsneuronen eines neuronalen Netzes mit zwei Zwischenlagen zugeführt, das wiederum die entsprechende Bewertung daraus ableitet.

Bleibt die Bewertung unterhalb einer bestimmten Schwelle, so wird eine Feinbewertung durchgeführt, für welche der Referenzverlauf mit herangezogen wird. Die bereits bei der Grobbewertung ermittelten Koeffizienten der quadratischen Terme der sieben Parabeln werden zusammen mit den entsprechenden aus dem Referenzverlauf abgeleiteten Grössen einem weiteren neuronalen Netz mit vierzehn Eingangsneuronen und zwei Zwischenlagen zugeleitet, das aus ihnen eine neue Bewertung ableitet.

Bei Verwendung teilkristalliner Stoffe ist das Vorgehen im wesentlichen gleich, eine Feinbewertung ist jedoch nicht vorgesehen, da schon eine minimal zu kurze Nachdruckzeit einen deutlichen Knick hervorruft. Die Entscheidung darüber, ob ein Nachregelungsbedarf vorliegt, wird ausschliesslich aufgrund der aus dem letzten Schuss abgeleiteten Bewertung getroffen.

Da der Druckverlauf im abgesuchten Intervall im wesentlichen konvex ist, wird mit der geschilderten Methode stets ein Knick aufgefunden, doch wird ein Nachregelungsbedarf nur dann festgestellt, wenn er einigermassen ausgeprägt ist und damit die Nachdruckzeit als zu kurz erkannt wurde. Eine zu lange Nachdruckzeit wird auf diese Weise nicht erkannt.

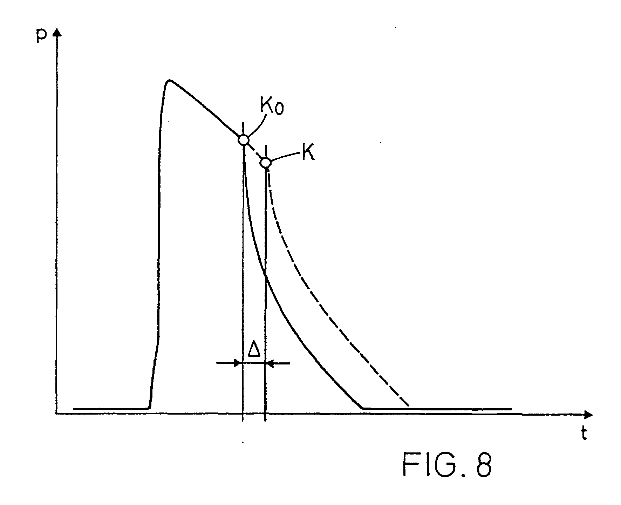

Unter Umständen, vor allem wenn die Oberflächenqualität des Spritzgussteils keine Rolle spielt oder wenn es vor allem auf seine Festigkeit, d.h. Freiheit von Spannungen ankommt, kann es ausnahmsweise erwünscht sein, dass ein Knick im Druckverlauf nicht vermieden wird, sondern gewollt ist, d.h. dass der Referenzverlauf einen Knick aufweist, den der aktuelle Druckverlauf jeweils reproduzieren soll. Auch in diesem Fall wird (Fig. 8) der Druckverlauf nach einem Knick abgesucht. Wird kein genügend ausgeprägter Knick gefunden, d.h. ergibt die oben geschilderte Grobbewertung eine Bewertung die unterhalb einer bestimmten Schwelle liegt oder wird ein Knick K identifiziert, der zeitlich gegenüber dem Knick K₀ der Referenzkurve um eine Differenz Δ verschoben ist, so wird die Nachdruckzeit, z.B. um einen festen oder einen etwa über eine Stufenfunktion von der Differenz Δ abhängigen Betrag verkürzt. Wird andererseit ein Knick identifiziert, der zeitlich vor demjenigen des Referenzverlaufs liegt, so wird die Nachdruckzeit, z.B. ebenfalls um einen festen oder der Differenz Δ abhängigen Betrag, verlängert.

Natürlich sind bei der Bestimmung der Führungsgrössen für die Nachdruckzeit zahlreiche Abwandlungen möglich. So kann man sich darauf beschränken, z.B. nur ein Teil der genannten Führungsgrössen zu bestimmten und auszuwerten oder dieselben können in anderer Anzahl bestimmt werden. Die Auffindung des Knicks könnte, da sich derselbe durch hohe konvexe Krümmung auszeichnet, auch durch Auswertung der zweiten Ableitung des geglätteten Druckverlaufs erfolgen. Ebenso ist es möglich, unter Inkaufnahme verminderter mechanischer Eigenschaften, für die Erzielung besonders glatter Oberflächen abweichend vom "idealen" Kurvenverlauf bei dem Referenzverlauf eines Gutteils einen überhöhten Nachdruck und/oder eine verlängerte Nachdruckzeit zu fordern. Auch eine solcher Referenzverlauf eines Gutteils kann mit den vorstehend geschilderten Verfahren nachgebildet werden.

### Formtemperatur:

Die Formtemperatur beeinflusst ebenfalls vor allem den abfallenden Teil des Druckverlaufs nach dem Druckmaximum M. Eine zu hohe Formtemperatur führt zu einem flachen Abfall, eventuell mit einem leicht konkaven Abschnitt. Sie verlängert die Zykluszeit und verringert demgemäss den Ausstoss. Da auch die übrigen Regelparameter, vor allem Nachdruckhöhe und Nachdruckzeit sich auf den abfallenden Teil des Druckverlaufs auswirken und die Formtemperatur sehr träge ist, ist eine Änderung derselben gewöhnlich nur dann sinnvoll, wenn diese Regelparameter richtige eingestellt sind. Daher erfolgen Änderungen nur unter der Bedingung, dass bei allen anderen Regelparametern, insbesondere den obengenannten kein Nachregelungsbedarf festgestellt wurde.

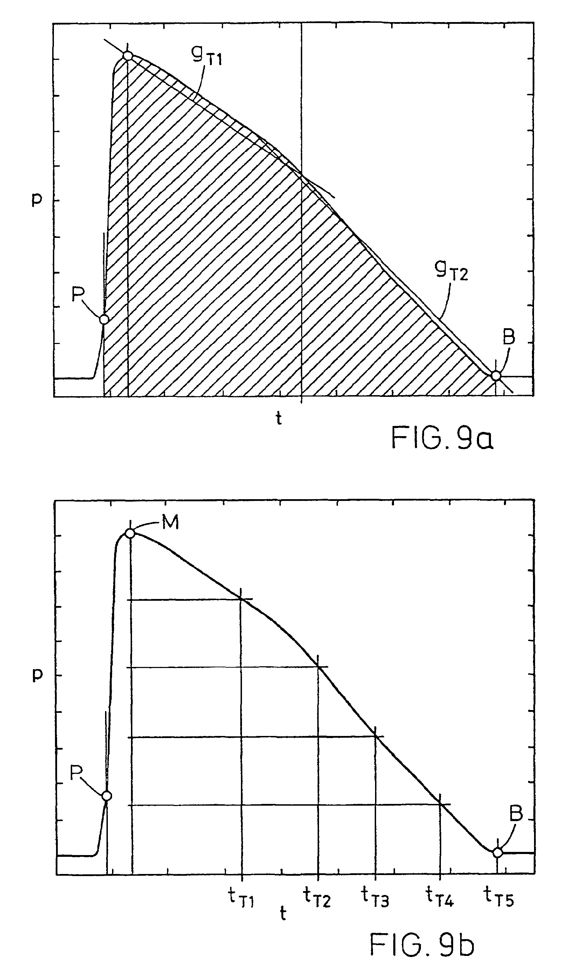

In die Bestimmung der Führungsgrössen für die Formtemperatur geht nur der Druckverlauf im zwischen dem Umgelegenenschaltpunkt P und dem Druckabfallende B gelegenen Intervall ein und hier vor allem die mittlere Höhe, die Konvexität und die Schnelligkeit des Abfalls nach dem Druckmaximum M. Als eine erste Führungsgrösse wird daher das Integral über den Druckverlauf entsprechend der schraffierten Fläche in Fig. 9a, geteilt durch die entsprechende vom Referenzverlauf abgeleitete Grösse bestimmt. Dann wird das Druckmaximum M des aktuellen Druckverlaufs, geteilt durch das Druckmaximum des Referenzverlaufs, als weitere Führungsgrösse bestimmt. Weiter wird das Intervall in zwei gleiche Teile geteilt und jeweils eine Regressionsgerade g_{T1} bzw. g_{T2} durch den Druckverlauf gelegt (Fig. 9a). Die Steigungen dieser Geraden, geteilt durch die entsprechenden aus dem Referenzverlauf abgeleiteten Grössen, werden als weitere Führungsgrössen bestimmt. Schliesslich werden die Zeitabstände zwischen dem Umschaltpunkt P und den Zeitpunkten t_{T1} - t_{T5}, an denen der Druck um 1/5, 2/5, 3/5 und 4/5 des Druckmaximums M gefallen bzw. das Druckabfallende B erreicht ist, ermittelt, jeweils durch die entsprechende aus dem Referenzverlauf abgeleitete Grösse geteilt und als weitere Führungsgrössen bestimmt.

Die Führungsgrössen werden den Eingangsneuronen eines neuronalen Netzes mit neun Eingangsneuronen und einer Zwischenlage zugeführt, das aus ihnen eine Bewertung für die Formtemperatur ableitet. Aufgrund derselben wird festgestellt, ob ein Nachregelungsbedarf besteht und gegebenenfalls ein Korrekturfaktor für die Formsolltemperatur festgelegt.

Es ist bei der Bestimmung der Führungsgrössen gewöhnlich auch ein anderes als das beschriebene Vorgehen möglich, es kommt jeweils darauf an, dass Merkmale, die die Einstellung des jeweiligen Regelparameters widerspiegeln, mit der erforderlichen Deutlichkeit aus dem Druckverlauf isoliert werden. Auch kann die Ableitung der Bewertungen mit anderen als den geschilderten Methoden, z.B. durch ein rein logisch-numerisches Verfahren statt unter Einbezug neuronaler Netze erfolgen oder es kann eine gemischte Verarbeitung erfolgen, bei der die Eingangsgrössen für die neuronalen Netze durch numerische Manipulationen aus den Führungsgrössen erzeugt werden oder auch die Bewertungen aus den Ausgangsgrössen, z.B. kann durch Multiplikation der Führungsgrössen mit einem konstanten Faktor die Empfindlichkeit eingestellt werden. Auch bei der Verwendung der Bewertungen zur Feststellung, ob überhaupt ein Nachregelungsbedarf besteht und gegebenenfalls zur Festlegung des Korrekturfaktors gibt es viele Möglichkeiten, deren Eignung in einem gegebenen Fall u.U. unter Heranziehung der Resultate von Probeläufen überprüft und bestätigt werden muss.

Wie bereits erwähnt, kann für die Eispritzgeschwindigkeit ein Profil vorgegeben sein, das mit einem ermittelten Regelfaktor multipliziert wird. Das Profil kann auf irgendeine Weise normiert sein, z.,B. kann der Maximalwert stets 1 betragen, so das das tatsächliche Maximum der Eispritzgeschwindigkeit dem Regelfaktor entspricht.

Wie gleichfalls erwähnt, kann sich das Profil auch aus einer Regelung ergeben. Bei einer bevorzugten Regelungsmethode wird die Eispritzgeschwindigkeit so eingestellt, dass der Druckverlauf in der Füllphase möglichst weitgehend einer einzigen Geraden entspricht. Bei einer derartigen Regelung breitet sich die Fliessfront gleichmässig aus, die Kavität 2 (Fig. 2) wird entsprechend gleichmässig aufgefüllt und Spannungen und Verzug im fertigen Spritzgussteil, die sich sonst oft aufgrund ungleicher, zu starken Scherungen führender Strömungsverhältnisse ergeben, werden vermieden.

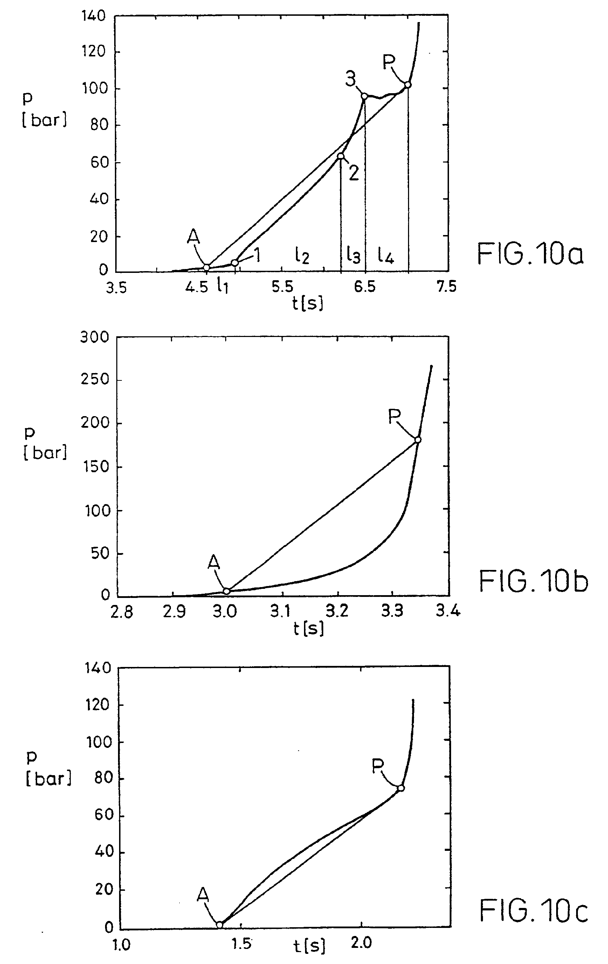

Vor Produktionsbeginn wird dabei beispielsweise jeweils mindestens ein Probeschuss mit einem fest vorgegebenen Probeprofil gemacht. Gewöhnlich ist das zu Beginn eingesetzte Probeprofil eine Konstante, d.h. es wird eine Eispritzgeschwindigkeit fest vorgegeben. Der resultierende Druckverlauf kann, je nach der Form der Kavität 2, z.T. auch je nach den Eigenschaften der verwendeten Kunststoffschmelze, verschiedene Formen annehmen. Drei typische mit konstanter Eispritzgeschwindigkeit aufgenommene Druckverläufe sind in den Figuren 10a-c dargestellt.

Gemäss Fig. 10a treten deutliche Knickstellen im Druckverlauf auf und die zwischen denselben liegenden Abschnitte weichen nur geringfügig von einem geradlinigen Verlauf ab. Die Füllphase lässt sich daher unmittelbar in Teilintervalle, im Beispiel vier Teilintervalle I₁,..,I₄ unterteilen, wobei die inneren Teilungspunkte 1-3 den Knickstellen entsprechen. Diese Unterteilung wird in der Regel für die Produktion festgehalten.

Während der Produktion soll der Druckverlauf möglichst weitgehend einer einzigen Geraden, die vom Einspritzbeginn A zum Umschaltpunkt P gezogen ist, entsprechen. Abweichungen von dieser Linie, wie sie z.B. durch sich ändernde Eigenschaften der Schmelze verursacht werden können, müssen registriert und durch geeignete Veränderungen korrigiert werden. Als Regelgrössen werden vorzugsweise die absoluten Grössen des Geschwindigkeits-Profils in den einzelnen Teilintervallen herangezogen.

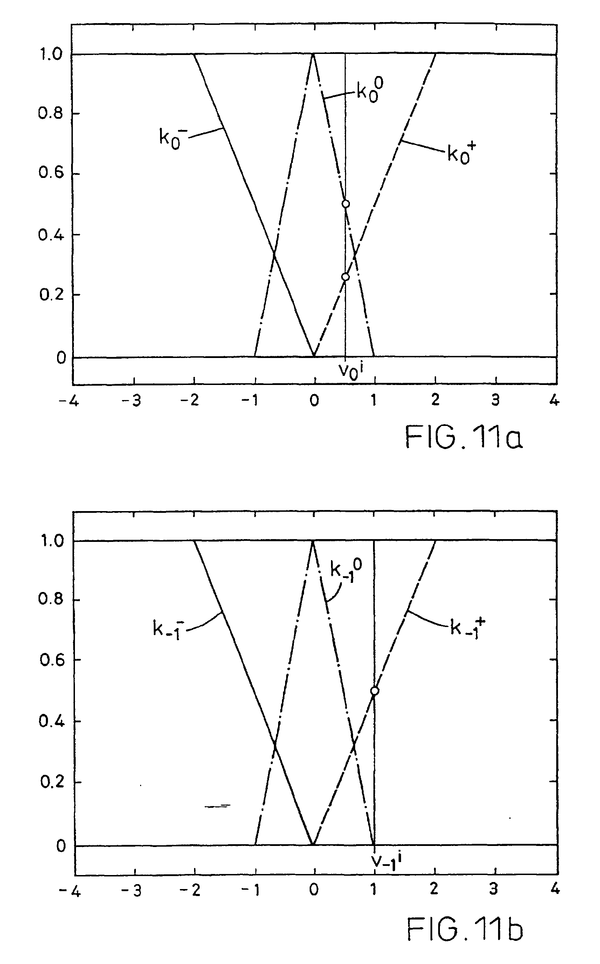

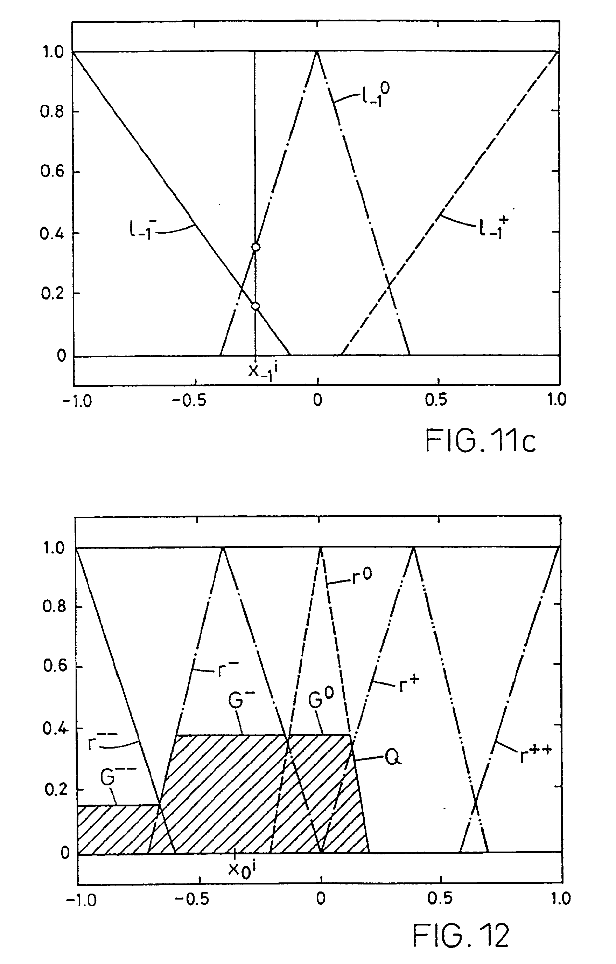

Zur Überprüfung der Linearität des Druckverlaufs während der Produktion wird beispielsweise nach jedem Schuss durch den Druckverlauf in jedem Teilintervall eine Gerade gezogen. Vorzugsweise ist dies eine nach der Methode des minimalen quadratischen Abstandes ermittelte Regressionsgerade, es kann sich aber auch um eine vom Anfangspunkt zum Endpunkt des Druckverlaufs im Teilintervall durchgezogene Sekante handeln. Aus den Steigungen u₁,..,u₄ dieser Geraden und der mittleren Steigung u des Druckverlaufs über die Füllphase können nun normierte Abweichungen der Steigungen v₀ⁱ = (uᵢ-u)/u, i=1,....,4 ermittelt werden, die dann mit Methoden der unscharfen Logik (fuzzy logic) zu Korrekturgrössen xᵢ, i=1,...,4 für die Regelgrössen verarbeitet werden. Dazu werden sie mittels Klassifizierungsfunktionen k₀-, k₀⁰ und k₀⁺ (Fig. 11a) ausgewertet und so drei Klassifizierungsgrössen ermittelt. Desgleichen werden die bei mindestens einem voraufgegangenen Schuss ermittelten entsprechenden Grössen v-₁ⁱ, i=1, ... 4 bestimmt und mittels Klassifizierungsfunktionen k₋₁⁻, k₋₁⁰, k₋₁⁺ (Fig. 11b) ausgewertet. Falls die Klassifizierungsfunktionen, wie dies gemäss Figuren 11a, b der Fall ist, gleich gewählt wurden wie für die aktuellen Grössen, kann eine neuerliche Auswertung natürlich unterbleiben und können die entsprechenden Klassifizierungsgrössen übernommen werden. Weiterhin können die für mindestens einen voraufgagenen Schuss ermittelten Korrekturgrössen x₋₁ⁱ, i=1, ..., 4 benützt werden um mittels Klassifizierungsfunktionen l₋₁⁻, l₋₁⁰ und l₋₁⁺ (Fig. 11c) ebenfalls Klassifizierungsgrössen zu gewinnen.

Für jedes der Teilintervalle Iᵢ, i=1,...,4 werden nun die Klassifizierungsgrössen in einer Verknüpfungsstufe miteinander in Beziehung gesetzt, und zwar werden aus den verschiedenen Kombinationen (k₀^{h1} (v₀ⁱ), k₋₁^{h2} (v₋₁ⁱ), 1-₁^{h3} (x₋₁ⁱ), h₁, h₂, h₃=-, 0, +) jeweils Werte wⱼ, j=1, .., 27 gebildet, z.B. durch Minimumbildung. Aus den Werten wⱼ werden dann fünf Gewichtungsgrössen Gₕ, h=--, -, 0, +, ++ gebildet , und zwar
G₋₋ = w₂₅
G₋ = max (wⱼ), j=21, 23, 24, 26
G₀ = max (wⱼ), j=1, 6, 8, ... 20, 22, 27
G₊ = max (wⱼ), j=2, 4, 5, 7
G₊₊ = w₃

Diese Grössen werden nun mittels Auswertungsfunktionen rₕ, h=--, -, 0, +, ++ (Fig. 12) umgesetzt, indem die Schaltfunktion
Q = max (min (rₕGₕ), h=--, -, 0, +, ++
gebildet wird. Die Projektion des Schwerpunkts der unter dem Graphen dieser Funktion liegenden Fläche auf die Abszisse ergibt nun die zwischen -1 und 1 liegende Korrekturgrössen x₀ⁱ. Für den nächsten Schuss wird für i=1, ..., 4 die entsprechende Regelgrösse durch Multiplikation mit einem Korrekturfaktor (1+x₀ⁱW) korrigiert, wobei W eine vorgegebene Maximaländerung darstellt, die nicht überschritten wird. Durch den Einbezug der beim voraufgehenden Schuss ermittelten Korrekturgrössen x₋₁ⁱ sowie der Grössen v₋₁ⁱ werden Überreaktionenwenn des Systems vermieden und verhindert, dass dasselbe in Schwingungen gerät.

Bei der Regelung ist auch die Maschinendynamik zu berücksichtigen. So ist z.B. eine sehr feine Unterteilung der Füllphase in Teilintervalle mit entsprechender Unterteilung des Profils nicht sinnvoll, wenn der Antrieb 9 (Fig. 1) der EinsEinspritzgeschwindigkeitpritzvorrichtung 4 den vorgegebenen Änderungen der Einspritzgeschwindigkeit gar nicht folgen kann.

Vor allem wenn sich der Querschnitt der Kavität 2 (Fig. 2) mit zunehmendem Abstand von der Angussöffnung 3 verringert, kann sich bei konstantem Probeprofil ein stark konkaver Druckverlauf ergeben (Fig. 10b). Von Druckverläufen der oben behandelten Art, wie sie Fig. 10a entnehmbar sind, lässt er sich verhältnismässig leicht dadurch unterscheiden, dass die Fläche zwischen dem Druckverlauf und der den Einspritzbeginn A und den Umschaltpunkt P verbindenden Sekante stark negativ ist (Abschnitte, wo der Druckverlauf unterhalb der Sekante liegt, gehen mit negativem Vorzeichen in die Rechnung ein). Ausserdem können kaum Knicke (im Inneren der Füllphase je nach der angewandten Methode gewöhnlich höchstens einer) festgestellt werden und zwischen allfälligen Knicken ist der Druckverlauf auch nicht annähernd linear.

Zur Feststellung eines Knicks kann dabei beispielsweise eine der im Vorhergehenden beschriebenen Methoden benutzt werden, z.B. durch Bestimmung des maximalen Abstandes der Druckverlaufskurve von einer Geraden, die Anfang A und Ende P der Füllphase verbindet. Es ist jedoch auch möglich Knicke durch Bilden der lokalen Extrema der zweiten Ableitung des Kurenverlaufes zu ermitteln.

Im Fall eines stark konkaven Druckverlaufes kann dieser dann grobkorrigiert werden, indem ein linear abfallendes Probeprofil eingesetzt wird, das die grossmassstäbliche Konkavität des Druckverlaufs kompensiert. Dadurch werden gewöhnlich vorher maskierte Knicke sichtbar. Der Druckverlauf entspricht dann qualitativ dem Fig. 10a entnehmbaren und kann im weiteren auch gleich wie oben für derartige Druckverläufe beschrieben behandelt werden. Es werden wiederum die normierten Abweichungen der Steigungen in den einzelnen Teilintervallen ermittelt. Die Auswertung mit Methoden der unscharfen Logik erfolgt weitgehend analog zum bereits geschilderten Fall. Allerdings werden nicht die absoluten Grössen des Profils in den einzelnen Teilintervallen als Regelgrössen herangezogen, sondern deren Steigungen. Die Einspritzgeschwindigkeit ist also in einem Teilintervall i.a. nicht konstant, sondern sie steigt oder fällt linear. Das Profil wird dabei so angelegt, dass seine Abschnitte an den Grenzen der Teilintervalle stetig aneinander anschliessen.

Ähnlich ist das Vorgehen bei einem konvexen Druckverlauf (Fig. 10c), wie er sich gewöhnlich bei sich erweiternder Kavität 2 (Fig. 2) ergibt. Hier kann eine Grobkorrektur mittels eines linear steigenden Probeprofils durchgeführt werden. Im weiteren wird dann wie im Zusammenhang mit den stark konkaven Druckverläufen nach Fig. 10b geschildert vorgegangen.

Die Regelung des Profils für die Einspritzgeschwindigkeit ist von der Regelung der übrigen Regelparameter nach dem Druckverlauf unabhängig. Die Kombination der Regelung des Profils mit der weiter oben beschriebenen Regelung der übrigen Regelparameter oder mindestens eines Teils davon, z.B. des Regelfaktors für die Einspritzgeschwindigkeit, führt zwar zu besonders günstigen Resultaten, doch ist die Regelung des Profils allein, verbunden z.B. mit einem fest vorgegebenen Regelfaktor, ebenfalls möglich und von günstigem Einfluss auf die Teilequalität.

## Patentansprüche

1. Verfahren zum Regeln einer Spritzgussanlage, in welcher durch eine steuerbare Einspritzvorrichtung (4) Kunststoffschmelzen in eine oder mehrere Kavitäten (2) eingespritzt werden, wobei der Werkzeuginnendruck (p) in mindestens einer der Kavitäten (2) gemessen und überwacht wird, **dadurch gekennzeichnet, dass** nach einem Schuss auf Grund eines Vergleichs des gemessenen Werkzeuginnendruck-Kurvenverlauf mit einem bekannten Soll- werkzeuginnendruck-Kurvenverlauf mindestens einer der Regelparameter Einspritzgeschwindigkeit, Nachdruckhöhe, Nachdruckzeit und/oder Werkzeugtemperatur frühestens für den nächsten Schuss angepasst wird, wobei vor jedem nächsten Schuss ausreichend Reaktionszeit für die Regelung gewährleistet wird.

2. Verfahren gemäss Anspruch 1, **dadurch gekennzeichnet, dass** eine Änderung eines Regelparameters erst erfolgt, wenn bei zwei oder mehr aufeinanderfolgenden Überprüfungen des entsprechenden Parameters mindestens zwei Überschreitungen vorbestimmter Schwellenwerte des Regelparameters auftreten.

3. Verfahren gemäss Anspruch 1 oder 2, **dadurch gekennzeichnet, dass** der Soll- Werkzeuginnendruck-Kurvenverlauf einem früher gemessenen Kurvenverlauf eines für gut befundenen Teiles entspricht.

4. Verfahren gemäss Anspruch 1 oder 2, **dadurch gekennzeichnet, dass** der Werkzeuginnendruck (p) an einer Stelle der Kavität (2) gemessen wird, an der ihr Querschnitt quer zur Fliessrichtung der Schmelze ein Maximum hat.

5. Verfahren nach einem der vorhergehenden Ansprüche, **dadurch gekennzeichnet, dass** die Regelparameter derart geregelt werden, dass der gemessene Kurvenverlauf möglichst identisch zum Soll- Kurvenverlauf verläuft.

6. Verfahren nach einem der vorhergehenden Ansprüche, **dadurch gekennzeichnet, dass** ein Umschaltpunkt bestimmt wird, zu dessen Zeitpunkt die Kavität vollständig gefüllt ist.

7. Verfahren nach einem Anspruch 6, **dadurch gekennzeichnet, dass** die Regelparameter vor und nach dem Umschaltpunkt geregelt werden.

## Claims

1. A process for the control of an injection moulding machine wherein by means of a controllable injection device (4) plastic melts are injected into one or more cavities (2) wherein the cavity pressure (p) in at least one of the cavities (2) is measured and monitored, **characterized in that** after an injection operation, by comparison of the measured curve shape of the cavity pressure with a known set curve shape of the cavity pressure, at least one of the control parameters of injection speed, holding pressure level, holding pressure time, and/or mould temperature is adjusted at the earliest for the next injection operation wherein sufficient reaction time for control is ensured prior to each of the next injection operations.

2. A process according to claim 1 **characterized in that** a change of the control parameter is performed not before in two or more successive examinations of the respective parameter this parameter at least twice exceeds pre-set threshold values for the control parameter.

3. A process according to claim 1 or 2 **characterized in that** the set curve shape for the cavity pressure corresponds to a previously measured curve shape of a piece considered as good.

4. A process according to claim 1 or 2 **characterized in that** the cavity pressure (p) is measured at a position of the cavity (2) at which the cross section thereof has a maximum in a direction transversal to the melt flow direction.

5. A process according to any of the preceding claims **characterized in that** the control parameters are controlled in a way that the measured curve shape is as identical as possible to the set curve shape.

6. A process according to any of the preceding claims **characterized in that** a switching point is determined at which time the cavity is completely filled.

7. A process according to claim 6 **characterized in that** the control parameters are controlled prior to and after the switching point.

## Revendications

1. Procédé pour la régulation d'une machine de moulage par injection, dans laquelle des bains de matière synthétique sont injectés dans une ou plusieurs cavités par un dispositif d'injection (4) contrôlable, la pression intérieure d'outil (p) étant mesurée et contrôlée dans au moins une des cavités (2), **caractérisé en ce que**, après une charge d'injection, sur la base d'une comparaison de la courbe mesurée de pression intérieure d'outil avec une courbe théorique de pression intérieure connue, au moins l'un des paramètres de régulation vitesse d'injection, hauteur de maintien en pression, temps de maintien en pression et/ou température d'outil, est adapté au moins pour la charge d'injection suivante, un temps de réaction suffisant étant garanti pour la régulation avant chaque charge d'injection suivante.

2. Procédé selon la revendication 1, **caractérisé en ce qu'**une variation d'un paramètre de régulation n'intervient que si, dans le cas de deux ou plus de deux contrôles consécutifs du paramètre correspondant, au moins deux dépassements de valeurs seuils prédéfinies du paramètre de régulation apparaissent.

3. Procédé selon la revendication 1 ou 2, **caractérisé en ce que** la courbe théorique de pression intérieure d'outil correspond à une courbe mesurée antérieurement d'une pièce jugée bonne.

4. Procédé selon la revendication 1 ou 2, **caractérisé en ce que** la pression intérieure d'outil (p) est mesurée en un endroit de la cavité (2) où sa section présente un maximum dans le sens transversal au sens d'écoulement du bain.

5. Procédé selon l'une quelconque des revendications précédentes, **caractérisé en ce que** les paramètres de régulation sont réglés de telle sorte que la courbe mesurée est le plus possible identique à la courbe théorique.

6. Procédé selon l'une quelconque des revendications précédentes, **caractérisé en ce qu'**un point d'inversion est déterminé, au moment duquel la cavité est complètement remplie.

7. Procédé selon la revendication 6, **caractérisé en ce que** les paramètres de régulation sont réglés avant et après le point d'inversion.
